# EUROPEAN PATENT APPLICATION

(11) **EP 3 770 313 A1**
(43) Date of publication of application: **27.01.2021**
(21) Application number: 19772558.3
(22) Date of filing: 14.03.2019
(51) Int. Cl.: D06C 7/00, D01F 8/14, D03D 15/00

(54) **METHOD FOR THERMOFORMING TEXTILE PRODUCT**

(30) Priority: 19.03.2018 JP 2018050348; 06.09.2018 JP 2018167031
(71) Applicant: Unitika Ltd., Amagasaki-shi, Hyogo 660-0824 (JP)
(72) Inventor: IKEDA, Kohei, Uji-shi Kyoto 611-8555 (JP); HONDA, Mariko, Uji Kyoto 6118555 (JP)
(74) Representative: Hoffmann Eitle
(86) International application number: PCT/JP2019/010604
(87) International publication number: WO 2019/181737

(57) **Abstract**

To provide a thermoforming method for obtaining a thermoformed article that exhibits excellent abrasion resistance at melt-bonded portions, and excellent adhesive strength between woven fabrics or to another kind of article. Polyethylene having a melt flow rate, measured under conditions of a temperature of 280°C and a load of 2.16 kg, of 10 to 15 g/10 min and polyethylene terephthalate are prepared. By a conjugate melt spinning method using the polyethylene terephthalate as a core component and the polyethylene as a sheath component, multi-filament yarn in which core-sheath composite filaments having a core component : sheath component mass ratio of 1 to 4 : 1 are bundled is obtained. A product of filaments is obtained by weaving, knitting, braiding or winding using the multi-filament yarn. Thermoforming of the product of filaments is carried out by heating the product of filaments to melt the polyethylene, thereby melt-bonding the core-sheath composite filaments to each other, with the polyethylene terephthalate retaining its initial filament form.

## Description

### TECHNICAL FIELD

The present invention relates to a method for thermoforming a product of filaments wherein multi-filament yarns obtained by bundling core-sheath composite filaments are formed into the product of filaments, and the product is thermoformed by heat and if necessary pressure. In particular, the present invention relates to a thermoforming method by which a thermoformed article having excellent abrasion resistance and excellent peeling strength when pasted to another kind of article can be obtained.

### BACKGROUND ART

It has been conventionally known that a product of filaments such as a woven fabric or a net fabric is produced using multi-filament yarn in which core-sheath composite filaments composed of polyethylene terephthalate as a core component and polyethylene as a sheath component are bundled. In addition, it has also been known that the product of filaments is used for a mesh sheet or the like. It is also known that, in the case of a mesh sheet, a woven fabric or a net fabric is thermoformed for preventing mesh slippage, in which the polyethylene, a sheath component of the core-sheath composite filaments, is softened or melted to melt-bond the intersections of the woven fabric or the net fabric to each other. These matters are described in Patent Literature 1.

### CITATIONS LIST

### PATENT LITERATURE

Patent Literature 1: JP 2009-299209 A

### SUMMARY OF INVENTION

### TECHNICAL PROBLEMS

However, it has been found that, when the woven fabric described in Patent Literature 1 or the like is thermoformed, abrasion resistance at melt-bonded portions is insufficient. It has been also found that when the woven fabrics described in Patent Literature 1 are laminated and thermoformed to be bonded, the woven fabrics have insufficient adhesive strength and easily peeled-off.

An object of the present invention is to provide a thermoforming method for preparing a thermoformed article that, when thermoformed, exhibits excellent abrasion resistance at melt-bonded portions, and excellent adhesive strength between the woven fabrics or to another kind of article.

### SOLUTIONS TO PROBLEMS

The present invention solves the above problems by adopting, as the polyethylene that is a sheath component of a core-sheath composite filaments, polyethylene having a low melt flow rate, that is, having low fluidity when melted. In other words, the present invention relates to a method for thermoforming a product of filaments, comprising: a step of bundling a plurality of core-sheath type composite filaments to obtain a multi-filament yarn, wherein the core-sheath type composite filament is composed of a sheath component formed from a polyethylene having a melt flow rate, measured under conditions of a temperature of 280°C and a load of 2.16 kg, of 10 to 15 g/10 min, and a core component formed from polyethylene terephthalate, which is obtained by a conjugate melt spinning method and has a core component : sheath component mass ratio of 1 to 4 : 1, a step of using the multi-filament yarn to prepare a product of filaments, and a step of heating the product of filaments to melt the polyethylene, thereby melt-bonding the core-sheath composite filaments to each other, with the polyethylene terephthalate retaining its initial filament form.

In the present invention, polyethylene having a melt flow rate, measured under conditions of a temperature of 280°C and a load of 2.16 kg, of 10 to 15 g/10 min is prepared. The kinds of polyethylene include linear high-density polyethylene, linear low-density polyethylene and branched polyethylene, which may have various molecular weights. Among these polyethylenes, the present invention uses the above-mentioned specific polyethylene. Specifically, linear low-density polyethylene having a high molecular weight is preferably used. It is not preferable that the melt flow rate be less than 10 g/10 min, because it is difficult to perform conjugate melt spinning with polyethylene terephthalate. On the other hand, it is not preferable that the melt flow rate exceed 15 g/10 min, because the abrasion resistance at the melt-bonded portions decreases and the adhesive strength to another kind of article decreases. It goes without saying that the melt flow rate is measured under conditions of a temperature of 280°C and a load of 2.16 kg in accordance with the method described in JIS K7210. In the examples of the present invention, the melt flow rate was measured under the above-mentioned conditions using an instrument called Melt Indexer G-01 manufactured by Toyo Seiki Seisaku-sho, Ltd.

Polyethylene terephthalate is prepared together with the above-mentioned specific polyethylene. As the polyethylene terephthalate, conventionally and publicly known ones are used. The polyethylene terephthalate is one that does not melt at a temperature at which the polyethylene melts, but retains the initial filament form. Accordingly, the melt flow rate may be freely determined, because it has nothing to do with abrasion resistance at the melt-bonded portions or adhesive strength. Using the polyethylene as the sheath component and the polyethylene terephthalate as the core component, core-sheath composite filaments are obtained by a conjugate melt spinning method, which filaments are then bundled to prepare multi-filament yarn. In the conjugate melt spinning method, the form of a nozzle hole and the discharge amount of the core component and the sheath component through the nozzle hole are adjusted such that the core component : sheath component mass ratio between the core component and the sheath component is 1 to 3 : 1. It is not preferable that the mass ratio of the sheath component be lower than this range, because the abrasion resistance at the melt-bonded portions or the adhesive strength decreases. On the other hand, it is not preferable that the mass ratio of the sheath component be higher than this range, because the diameter of the core component that retains the initial filament form becomes so small that the tensile strength of the thermoformed article decreases. A fineness of the core-sheath composite filaments may be freely determined, but is generally within the range of 4-20 dtex. In addition, the number of the bundled core-sheath composite filaments for preparing the multi-filament yarn may be freely determined, but is generally about 30 to 400 filaments. In addition, it is preferable that the core and the sheath of the core-sheath composite filaments are generally concentrically arranged. When the core and the sheath are eccentric to each other, the filaments tend to shrink during thermoforming, resulting in poor shape stability.

The product of filaments is obtained using the multi-filament yarn. The multi-filament yarn may be non-twisted one, but is generally twisted one. As the product of filaments, for example, a woven fabric may be obtained by weaving the multi-filament yarns as warp and weft, or a knitted fabric may be obtained by hanging the multi-filament yarns on a warp knitting machine and a weft knitting machine. Also, a knotted net fabric or an unknotted net fabric may be obtained by twisting the plurality of multi-filament yarns. Furthermore, a string may be obtained by braiding the plurality of multi-filament yarns. In addition, conventionally and publicly known products of filaments are obtained by various methods.

When the product of filaments such as a knitted or woven fabric obtained by performing knitting or weaving, the multi-filament yarns are passed through a reed. Specifically, in the case of a woven fabric, the multi-filament yarns that are warp are passed through a reed way, and in the case of a warp knitting, the multi-filament yarns that are warp are passed through a guide eye of a reed. At this time, the multi-filament yarns come into contact with the edge of the reed way or guide eye to cause friction, so that the multi-filament yarns are frayed. The multi-filament yarns for use in the present invention exhibit excellent abrasion resistance in such a situation. This is because, the sheath component of the core-sheath composite filaments composing the multi-filament yarn has so low melt flow rate that, even when the sheath component that comes into contact with the edge of the reed way or guide eye is melted or softened by frictional heat, the sheath component becomes difficult to adhere to the edge of the reed way or guide eye, and thus the sheath component is not easily scraped off. In particular, when magnesium stearate is formulated in the sheath component, the sheath component becomes more difficult to adhere to the edge of the reed way or guide eye. The content of magnesium stearate in the sheath component may be about 0.01 to 1% by weight. Accordingly, when the multi-filament yarn for use in the present invention is adopted, it is possible to prepare a product of filaments such as a knitted or woven fabric, with the damage to the sheath component in the core-sheath composite filaments prevented, and when the products are heat-bonded to each other, it is possible to improve adhesive strength.

Next, the obtained product of filaments is heated for thermoforming. The heating temperature is equal to or higher than the melting point of the polyethylene that is the sheath component of the core-sheath composite filaments, specifically equal to or higher than 140°C. This heating melts the polyethylene, thereby melt-bonding the core-sheath composite filaments to each other, with the polyethylene terephthalate that is the core component retaining the initial filament form, resulting in the thermoformed article. For example, by adopting a coarse knitted or woven fabric or net fabric as the product of filaments, and heating the knitted or woven fabric or net fabric to melt the polyethylene, the thermoformed article is obtained that is firmly melt-bonded at the intersections of the knitted or woven fabric or net fabric. The intersections of the knitted or woven fabric or net fabric are, for example, crossings of the warp and the weft in the case of a woven fabric, and knots in the case of a knitted fabric or net fabric. Such a thermoformed article can be favorably used in a building site as a mesh sheet, a peeling-prevention sheet or the like in which dislocation does not easily occur. In addition, by performing melt-bonding not only at the intersections of the knitted or woven fabric or net fabric, but also as a whole, the thermoformed article having rigidity can be obtained suitably used as a fishing net such as a stationary net, a basket net or an aquaculture net.

A laminate formed by laminating the obtained products of filaments to each other may be heated for thermoforming. For example, woven fabrics, a woven fabric and a net fabric, or a knitted fabric and a net fabric may be laminated to each other for thermoforming. In this case, on the laminated surfaces in the laminate, the core-sheath composite filaments of the upper layer product and the lower layer product are melt-bonded and adhered to each other, resulting in a composite material that is not easily peeled off on the laminated surfaces. In addition, a laminate formed by laminating the product of filaments and another kind of article may be heated for thermoforming. In this case, the sheath component of the core-sheath composite filaments in the product are melt-bonded and adhered to the other kind of article. The other kind of article includes any articles such as plastic articles, metal articles or ceramic articles. In particular, when a housing made of a polyolefin resin or the like is used as the other kind of article, the sheath component of the core-sheath composite filaments and the polyolefin resin are firmly adhered to each other, and the core component retains the initial filament state, resulting in a reinforced housing.

### ADVANTAGEOUS EFFECTS OF INVENTION

According to the method for thermoforming a product of filaments according to the present invention, since the product contains core-sheath composite filaments having a specific polyethylene as a sheath component, when the core-sheath composite filaments are melt-bonded to each other with the polyethylene, the abrasion resistance at melt-bonded portions can be improved. In addition, the adhesive strength can be increased between the melt-bonded core-sheath composite filaments with the polyethylene. Therefore, for example, when the product of filaments for use in the present invention and another kind of article are laminated and melt-bonded to each other, the product of filaments and the other kind of article are not easily peeled off.

### EXAMPLES

### Example 1

### [Preparation of multi-filament yarn]

As a sheath component, polyethylene (manufactured by Japan Polyethylene Corporation, product number UJ960) having a melting point of 126°C and a melt flow rate of 13.2 g/10 min was prepared. As a core component, polyethylene terephthalate having a melting point of 256°C was prepared.

The polyethylene and the polyethylene terephthalate were fed to a conjugate melt spinning apparatus equipped with a core-sheath conjugate spinneret having 192 holes with a hole diameter of 0.6 mm at a spinneret temperature of 280°C and a polyethylene : polyethylene terephthalate of 1 : 3 (mass ratio) to perform conjugate melt spinning. The obtained yarn in which 192 core-sheath composite filaments were bundled was subjected to cooling, stretching and relaxation treatments by conventional means to prepare multi-filament yarn having 1670 dtex/ 192 filaments.

### [Preparation and thermoforming of product of filaments (Part 1)]

The obtained multi-filament yarn was twisted with a twist number of 60 T/m, and used as warp and weft to prepare a plain-woven fabric having a warp density and a weft density of 20 yarns/inch by weaving. Two pieces of the plain-woven fabric cut into a width of 40 mm and a length of 260 mm were laminated and placed in a mold, and thermoformed under conditions of a temperature of 150°C, a time period of 5 minutes and a pressure 0.5 MPa, and a thermoformed article A was obtained having a melt-bonded portion with a width of 20 mm and a length of 200 mm formed in the central portion. The thermoformed article A had two plain-woven fabrics firmly adhered to each other, in which in the central portion, the sheath components of the core-sheath composite filaments in the respective plain-woven fabrics were melt-bonded to each other.

### [Preparation and thermoforming of product of filaments (Part 2)]

The obtained multi-filament yarn was twisted with a twist number of 60 T/m and introduced into an 8-square braiding machine to prepare an 8-yarn braid. Then, under conditions of a temperature of 150°C and a time period of 10 minutes, the sheath components of the core-sheath composite filaments in the braid were melt-bonded to each other to prepare a thermoformed article B which was integrated as a whole. This thermoformed article B had excellent abrasion resistance.

### Example 2

Multi-filament yarn was obtained in the same manner as in Example 1 except that as the sheath component, polyethylene (manufactured by Prime Polymer Co., Ltd., product number SP4030) having a melting point of 127°C and a melt flow rate of 14.5 g/ 10 min was used. Using the multi-filament yarn, thermoformed articles A and B were prepared by performing Preparation and thermoforming of product of filaments (Part 1) and (Part 2) in the same manner as in Example 1.

### Comparative Example 1

Multi-filament yarn was obtained in the same manner as in Example 1, except that as the sheath component, polyethylene (manufactured by Japan Polyethylene Corporation, product number HJ490) having a melting point of 133°C and a melt flow rate of 65.3 g/ 10 min was used. Using the multi-filament yarn, thermoformed articles A and B were prepared by performing Preparation and thermoforming of product of filaments (Part 1) and (Part 2) in the same manner as in Example 1.

### Comparative Example 2

Multi-filament yarn was obtained in the same manner as in Example 1, except that as the sheath component, polyethylene (manufactured by Japan Polyethylene Corporation, product number UJ560) having a melting point of 123°C and a melt flow rate of 59.8 g/10 min was used. Using the multi-filament yarn, thermoformed articles A and B were prepared by performing Preparation and thermoforming of product of filaments (Part 1) and (Part 2) in the same manner as in Example 1.

For the thermoformed articles A obtained in Examples 1 and 2 and Comparative Examples 1 and 2, using Autograph AG50kNI manufactured by Shimadzu Corporation, parts of the plain-woven fabrics not bonded to each other at one end along the width of the thermoformed article A were hold with a chuck, and a peeling test was performed at a pulling speed of 100 mm/min to measure the peeling strength. The peeling test was performed on three thermoformed articles A, and the peeling strength was defined as the average value among the respective values at which the load had the maximum value during the test. As a result, the peeling strength was 17.8 N for the thermoformed article A according to Example 1, 15.7 N for the one according to Example 2, 10.1 N for the one according to Comparative Example 1, and 13.1 N for the one according to Comparative Example 2. From these, it can be seen that the thermoformed articles A according to Examples 1 and 2 are excellent in adhesive strength between two plain-woven fabrics.

For the thermoformed articles B obtained in Examples 1 and 2 and Comparative Examples 1 and 2, using a abrasion resistance tester manufactured by Yonekura MFG Co., Ltd., the abrasion resistance was evaluated. Specifically, a 180 g weight was hung on one end of the thermoformed article B, and the other end was gripped by a chuck such that the thermoformed article B came into contact with a hexagonal rod at a right angle. Then, the other end was reciprocated. The number of reciprocating motions was 30 ± 1 times/min, and the stroke width was 230 mm ± 30 mm. As a result, the fluffing on the surface of the thermoformed articles B according to Comparative Examples 1 and 2 was more remarkable than that of the thermoformed articles B according to Examples 1 and 2. In addition, replacing the 180 g weight with a 1 kg weight and performing the abrasion resistance test for about 20 minutes, the thermoformed articles B according to Examples 1 and 2 did not break, whereas the thermoformed article B according to Comparative Example 1 broke in about 15 minutes. Furthermore, the thermoformed article B according to Comparative Example 2 did not break, but the melt-bonding of the thermoformed article B was released, and the multi-filament yarn was exposed and became fibrous. From these, it can be seen that the thermoformed articles B according to Examples 1 and 2 are excellent in abrasion resistance.

### Example 3

### [Preparation of multi-filament yarn]

As the sheath component, a polyethylene composition was prepared by adding 0.05% by weight magnesium stearate to polyethylene (manufactured by Japan Polyethylene Corporation, product number UJ960) having a melting point of 126°C and a melt flow rate of 13.2 g/ 10 min. On the other hand, as a core component, polyethylene terephthalate having a melting point of 256°C was prepared.

The polyethylene composition and the polyethylene terephthalate were fed to a conjugate melt spinning apparatus equipped with a core-sheath conjugate spinneret having 128 holes with a hole diameter of 0.6 mm at a spinneret temperature of 280°C and a polyethylene composition : polyethylene terephthalate of 1 : 3 (mass ratio) to perform conjugate melt spinning. The obtained yarn in which 128 core-sheath composite filaments were bundled was subjected to cooling, stretching and relaxation treatments by conventional means to prepare multi-filament yarn having 1830 dtex/ 128 filaments.

The obtained multi-filament yarn was twisted with a twist number of 60 T/m and introduced into an 8-square braiding machine to prepare an 8-yarn braid. Then, under conditions of a temperature of 180°C and a time period of 2 minutes, the sheath components of the core-sheath composite filaments in the braid were melt-bonded to each other to prepare a thermoformed article which was integrated as a whole. This thermoformed article had excellent abrasion resistance.

In addition, three reeds made of stainless steel (44 reed dents/inch) were prepared and arranged in parallel, and the position of the reed in the middle was displaced such that the multi-filament yarn was passed through the reed in the middle at an angle of 45°. In this situation, the multi-filament yarn was run for 10 minutes at a speed of 1000 m/min. After that, when each reed was observed with a microscope, shavings were attached, but the amount was very small.

## Claims

1. A method for thermoforming a product of filaments, comprising:
a step of bundling a plurality of core-sheath type composite filaments to obtain a multi-filament yarn, wherein the core-sheath type composite filament is composed of a sheath component formed from a polyethylene having a melt flow rate, measured under conditions of a temperature of 280°C and a load of 2.16 kg, of 10 to 15 g/10 min, and a core component formed from polyethylene terephthalate, which is obtained by a conjugate melt spinning method and has a core component : sheath component mass ratio of 1 to 4 : 1,
a step of using the multi-filament yarn to prepare a product of filaments, and
a step of heating the product of filaments to melt the polyethylene, thereby melt-bonding the core-sheath composite filaments to each other, with the polyethylene terephthalate retaining its initial filament form.

2. The method for thermoforming a product of filaments according to claim 1, wherein the product of filaments is selected from the group consisting of a knitted or woven fabric, a net fabric and a string.

3. The method for thermoforming a product of filaments according to claim 1, wherein after the products are laminated to each other, the polyethylene is melted with the polyethylene terephthalate retaining its initial filament form, and the core-sheath composite filaments existing in the products are melt-bonded to each other, simultaneously the products are integrated to each other.

4. The method for thermoforming a product of filaments according to claim 1, wherein after the product and another kind of article are laminated to each other, the polyethylene is melted with the polyethylene terephthalate retaining its initial filament form, and the core-sheath composite filaments existing in the product are melt-bonded to each other, simultaneously the product and the other kind of article are integrated to each other.

5. The multi-filament yarn used in the method according to claim 1, **characterized in that**
the multi-filament yarn is formed by bundling a plurality of the core-sheath composite filaments,
wherein the core-sheath type composite filament is composed of a sheath component formed from a polyethylene having a melt flow rate, measured under conditions of a temperature of 280°C and a load of 2.16 kg, of 10 to 15 g/10 min, and a core component formed from polyethylene terephthalate, which has a core component : sheath component mass ratio of 1 to 4 : 1,

6. The multi-filament yarn according to claim 5, wherein the sheath component comprises magnesium stearate.
